# EUROPEAN PATENT APPLICATION

(11) **EP 3 477 469 A1**
(43) Date of publication of application: **01.05.2019**
(21) Application number: 16906028.2
(22) Date of filing: 26.08.2016
(51) Int. Cl.: G06F 9/445

(54) **METHOD AND APPARATUS FOR APPLICATION TO RECEIVE INFORMATION**

(30) Priority: 23.06.2016 CN 201610465730
(71) Applicant: ZTE Corporation, Shenzhen, Guangdong 518057 (CN)
(72) Inventor: YAN, Haiqing, Shenzhen Guangdong 518057 (CN)
(74) Representative: Nordmeyer, Philipp Werner
(86) International application number: PCT/CN2016/096920
(87) International publication number: WO 2017/219488

(57) **Abstract**

Provided are a method and apparatus for an application to receive information. The method includes: when a terminal starts up and an application is loaded, acquiring a registration starting request message of a new application, wherein the new application is an application process that belongs to the same application as an original application process, and runs on the same terminal simultaneously with the process of the original application, and the original application is an application process installed by a system of the terminal; registering the new application in an application management system according to the registration starting request message; and after the new application is registered successfully, sending server information, received from a server, to the new application. By means of the embodiments of the present disclosure, the problem that when a terminal starts up and an application is loaded, a new application can automatically receive server information only after being manually started by a user, thus causing the loss or delay of new application information and bringing great inconvenience to the user for use, is solved, so that the new application can automatically acquire the server information without human intervention, and the effects of efficiency and accuracy of the new application acquiring the information are improved.

## Description

### TECHNICAL FIELD

The present disclosure relates to communication field, and in particular, to a method and apparatus for an application to receive information.

### BACKGROUND

Currently, one application in a terminal usually runs only one process, such as logging in to WeChat in the terminal with one account. However, as functions of applications in a terminal become more and more powerful, the user expects to login to a same application in the same terminal with different accounts at the same time, which means that one application may run multiple processes at the same time. In this regard, the application process itself is called the original application, while other application processes running at the same time are called derived new applications. The new applications refer to the running of multiple processes, such as dual WeChat, dual microblog, etc, under the system application management.

In the related art, all applications in a terminal may be registered in a application management system. When the terminal starts up and loads applications, each application sends a registration starting request message to the application management system, and the application management system broadcasts information received from a server to each application according to the registration starting request message. Then, each application performs processing according to content of the information.

Since only an original application performs the startup and registration process, the application management system can recognize only the installation package registration information of the original application; a new application does not perform the startup registration process, so the new application cannot automatically receive the information sent by the server, thereby causing that, when the terminal starts up and loads applications, the new application can automatically receive the server information only after the user manually starts the new application. This results in loss or delay of the new application information, bringing great inconvenience to the user. At present, there is no effective solution to solve the above technical problem yet.

### SUMMARY

The embodiments of the present disclosure provide a method and apparatus for an application to receive information so as to solve at least the following problem: when the terminal starts up and loads applications, a new application can automatically receive server information only after a user manually starts the new application, resulting in loss or delay of the new application information, and thereby bringing great inconvenience to the user.

According to an embodiment of the present disclosure, provided is a method for an application to receive information, which includes: acquiring, when a terminal starts up and loads applications, a registration starting request message of a new application, wherein the new application is an application process belonging to the same application as a process of an original application and running on the same terminal simultaneously with the process of the original application, and the original application is an application process installed by a system of the terminal; registering the new application in an application management system according to the registration starting request message; and sending server information received from a server to the new application after the new application is registered successfully.

Optionally, the sending the server information received from the server to the new application includes: broadcasting the server information to the new application after the server information sent from the application management system is received.

Optionally, prior to the acquiring the registration starting request message of the new application, the method further includes: acquiring an original application list for generating the new application, wherein the original application list includes the original application and a marker switch for new application management corresponding to the original application; and starting and running the process of the new application corresponding to the original application, when the marker switch for new application management is in an on state.

Optionally, after the original application initiates a registration starting request, the method further includes: generating, if it is detected that the original application is listed in the original application list and the marker switch for new application management is in an on state, a new application list corresponding to the original application and sending a starting instruction to the new application listed in the new application list, wherein the starting instruction is configured for instructing the new application to send the registration starting request message.

Optionally, the broadcasting the server information to the new application includes: broadcasting the server information to the new application listed in the new application list.

According to another embodiment of the present disclosure, provided is an apparatus for an application to receive information, which includes: a first acquisition module configured to acquire, when a terminal starts up and loads applications, a registration starting request message of the new application, wherein the new application is an application process belonging to a same application as a process of an original application and running on the same terminal simultaneously with the process of the original application, and the original application is an application process installed by a system of the terminal; a registration module configured to register the new application in an application management system according to the registration starting request message; and a first sending module configured to send server information received from a server to the new application after the new application is registered successfully.

Optionally, the first sending module is further configured to broadcast the server information to the new application after the server information sent from the application management system is received.

Optionally, the apparatus further includes: a second acquisition module configured to acquire an original application list for generating the new application, wherein the original application list includes the original application and a marker switch for new application management corresponding to the original application; and a starting module configured to start and run the process of the new application corresponding to the original application when the marker switch for new application management is in an on state.

Optionally, the apparatus further includes: a second sending module configured to generate, if it is detected that the original application is listed in the original application list and the marker switch for new application management is in an on state after the original application initiates a registration starting request, a new application list corresponding to the original application and send a starting instruction to the new application listed in the new application list, wherein the starting instruction is configured for instructing the new application to send the registration starting request message.

Optionally, the first sending module is further configured to broadcast the server information to the new application listed in the new application list.

According to a still further embodiment of the present disclosure, provided is a storage medium. The storage medium is configured to store program codes for carrying out the following steps: step S1, acquiring, when a terminal starts up and loads applications, a registration starting request message of a new application, wherein the new application is an application process belonging to the same application as a process of an original application and running on the same terminal simultaneously with the process of the original application, and the original application is an application process installed by a system of the terminal; step S2, registering the new application in an application management system according to the registration starting request message; and step S3, sending server information received from a server to the new application after the new application is registered successfully.

Optionally, the storage medium is further configured to store program codes for carrying out the following step: broadcasting the server information to the new application after the server information sent from the application management system is received.

Optionally, the storage medium is further configured to store program codes for carrying out the following steps: step S1, acquiring an original application list for generating the new application, wherein the original application list includes the original application and a marker switch for new application management corresponding to the original application; and step S2, starting and running the process of the new application corresponding to the original application, when the marker switch for new application management is in an on state.

Optionally, the storage medium is further configured to store program codes for carrying out the following step: after the original application initiates a registration starting request, generating, if it is detected that the original application is listed in the original application list and the marker switch for new application management is in an on state, a new application list corresponding to the original application and sending a starting instruction to the new application listed in the new application list, wherein the starting instruction is configured for instructing the new application to send the registration starting request message.

Optionally, the storage medium is further configured to store program codes for carrying out the following step: broadcasting the server information to the new application listed in the new application list.

According to the embodiments of the present disclosure, when a terminal starts up and loads applications, it can acquire automatically a registration starting request message of a new application, and send server information received from a server to the new application according to the registration starting request message; thus, it is achieved that the new application acquires the server information automatically. Therefore, the following problem is solved: when the terminal starts up and loads applications, a new application can automatically receive the server information only after the user manually starts the new application, resulting in loss or delay of the new application information, and thereby bringing great inconvenience to the user. In this way, the effects are achieved that a new application can automatically acquire the server information without human intervention when the terminal starts up and loads applications, and efficiency and accuracy of the information acquisition of the new application are improved.

### BRIEF DESCRIPTION OF THE FIGURES

The drawings described herein which constitute a part of the present disclosure are provided for further understanding the present disclosure. The exemplary embodiments of the present disclosure and the descriptions thereof are intended to explain the present disclosure and should not be considered as a limitation of the present disclosure. In the drawings:
FIG. 1 is a block diagram of hardware of a mobile terminal using a method for an application to receive information according to an embodiment of the present disclosure;
FIG. 2 is a flow chart (I) of a method for an application to receive information according to the embodiment of the present disclosure;
FIG. 3 is a flow chart (II) of a method for an application to receive information according to an embodiment of the present disclosure;
FIG. 4 is a block diagram (I) of an apparatus for an application to receive information according to an embodiment of the present disclosure;
FIG. 5 is a block diagram (II) of an apparatus for an application to receive information according to an embodiment of the present disclosure; and
FIG. 6 is a block diagram (III) of an apparatus for an application to receive information according to an embodiment of the present disclosure.

### DETAILED DESCRIPTION

The present disclosure will be described in detail below in conjunction with the embodiments and with reference to the drawings. It should be appreciated that the embodiments and the features in the embodiments of the present disclosure may be combined as long as they do not conflict with each other.

It should be appreciated that the terms first, second, etc. are only used to distinguish one element from another element, and should not be used to describe a specific sequence or an order.

### Embodiment 1

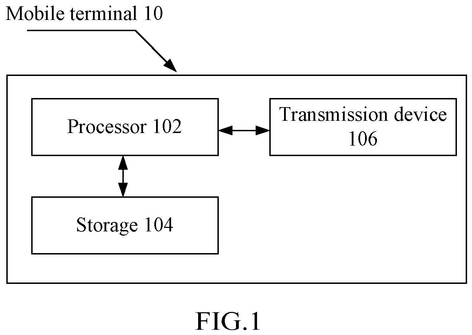

The embodiment 1 of the present disclosure provides a method which can be carried out in a computing device such as a mobile terminal, a computer terminal and the like. Taking a case that it is carried out in a mobile terminal as an example, FIG. 1 is a block diagram of hardware of a mobile terminal using a method for an application to receive information according to an embodiment of the present disclosure. As shown in FIG. 1, the mobile terminal 10 may includes one or more (only one is shown in the figure) processors 102 (the processor 102 may include but not limited to a processing device such as a microprocessor MCU or a programmable logic device FPGA), a storage 104 for storing data, and a transmission device 106 for communication. It will be appreciated by an ordinary person skilled in the art that the structure as shown in FIG. 1 is just illustrative, and the structure of the above electronic device is not limited thereto. For instance, the mobile terminal 10 may include more or less components than those shown in FIG. 1, or have a configuration different from that shown in FIG. 1.

The storage 104 may be configured for storing software programs and modules of an application software, such as program instructions/modules corresponding to a method for an application to receive information in an embodiment of the present disclosure; the processor 102 performs various function applications and data processing, i.e., implements the above method, by running the software programs and modules stored in the storage 104. The storage 104 may include a high-speed random access memory or a nonvolatile memory, such as one or more magnetic storage devices, flash memories, or other nonvolatile solid-state memories. In some embodiments, the storage 104 may further include remote storages located far away from the processor 102. These remote storages may be connected to the mobile terminal 10 via a network. An instance of the network includes, but not limited to, the internet, the intranet, the local area network, the mobile communication network and the combination thereof.

The transmission device 106 is configured for receiving or sending data via a network. A specific instance of the above network includes a wireless network provided by communication provider of the mobile terminal 10. In an instance, the transmission device 106 includes a network interface controller (NIC) which can be connected to other network devices by a base station and thus can be in communication with the internet. In an instance, the transmission device 106 may be a radio frequency (RF) module which is in communication with the internet wirelessly.

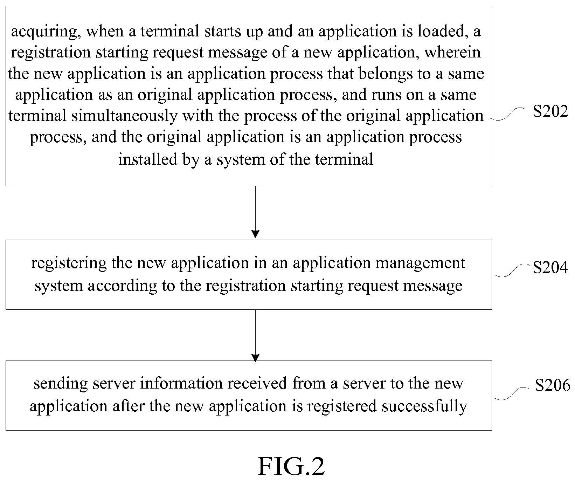

In the present embodiment, a method for an application to receive information which runs on the above mobile terminal 10 is provided. FIG. 2 is a flow chart (I) of the method for an application to receive information according to the embodiment of the present disclosure. As shown in FIG. 2, the flow includes the following steps S202-S206.

Step S202, when a terminal starts up and loads applications, acquiring a registration starting request message of a new application, wherein the new application is an application process that belongs to the same application as an original application process, and runs on the same terminal simultaneously with the original application process, and an original application is an application process installed by a system of the terminal.

Step S204, registering the new application in an application management system according to the registration starting request message.

Step S206, sending server information received from a server to the new application after the new application is registered successfully.

According to the above steps, when the terminal starts up and loads applications, it can acquire automatically the registration starting request message of the new application, and send the server information received from the server to the new application according to the registration starting request message; thus, it is achieved that the new application acquires the server information automatically. Therefore, the following problem is solved: when the terminal has starts up and loads applications, a new application can automatically receive the server information only after the user manually starts the new application, resulting in loss or delay of the new application information, and thereby bringing great inconvenience to the user. In this way, the effects are achieved that a new application can automatically acquire the server information without human intervention when the terminal starts up and loads applications, and efficiency and accuracy of the information acquisition of the new application are improved.

In an optional embodiment, the above step S206 may be implemented by the following step: broadcasting the server information to the new application after the server information sent from the application management system is received.

The above application management system is configured for detecting application package names, acquiring self-registration starting request information of various applications in the terminal, and forwarding the server information to the applications.

Optionally, because different applications have different package names registered by their installation packages, the application management system broadcasts server information received from the server to respective applications (including the original application and the new application) according to package name IDs of respective applications. In the present embodiment, the registration starting request information of the new application is also sent to the application management system of the terminal, which achieves a fast and accurate transmission of the server information to the new application. Therefore, the following problem is solved: a new application can automatically receive the server information only after the user manually starts the new application, resulting in loss or delay of the new application information. In this way, the effect of improving efficiency and accuracy of the information acquisition of the new application is achieved.

In an optional embodiment, before the step S202, the following steps may be performed: acquiring an original application list supporting generation of the new application, wherein the original application list includes the original application and a marker switch for new application management corresponding to the original application; and starting and running the process of the new application corresponding to the original application when the marker switch for new application management is in an on state. In the present embodiment, an original application list supporting the generation of the new application may be acquired from the application management system, and the original application list may be provided with a marker switch for new application management. The original application which has the marker switch for new application management has permission to generate a new application. When the management marker switch is in an on state, the original application may generate the new application, i.e., start and run the process of the new application. The process of the new application is a process associated with the process of the original application, and is invisible in the application management list of the application management system (only the process of the original application is visible). Generally, by default, the marker switch for new application management is in an off state. The above marker switch for new application management may be implemented as, but not limited to, a control or a settable attribute in software.

In an optional embodiment, after an original application initiates a registration starting request, if it is detected that the original application is listed in the original application list and the marker switch for new application management is in an on state, a new application list corresponding to the original application is generated and a starting instruction is sent to the new application(s) listed in the new application list, wherein the starting instruction is configured for instructing the new application(s) to send the registration starting request message. In the present embodiment, since the new application list is a derived list associated with the original application, it may be generated according to information (such as a package name ID of a new application) of the new application(s). The new application list may include data information such as the package name ID of the original application, the package name ID(s) of the new application(s), the name(s) of the new application(s), the icon(s) of the new application(s), the capability set, and so on. Optionally, the package name ID of a new application may be constructed from the package name ID of the original application and a suffix, and the capability set may include some attribute information of the new application(s), such as sharing, permission for use, security protection, etc.

Optionally, when the terminal starts up and loads applications, an original application initiates a registration starting request; meanwhile, it is determined whether the original application is listed in the original application list and whether the marker switch for new application management is in the on state. If the original application is listed in the original application list and the marker switch for new application management is in the on state, a corresponding new application list is determined according to the package name ID of the original application. After determining the new application list, a starting instruction is sent to a new application in the new application list corresponding to the package name ID of the new application. After the starting instruction is received, the new application packs registration starting request information and sends the same, wherein the starting request information includes the package name ID of the new application.

In an optional embodiment, the above step of broadcasting the server information to the new application may further include the following operation: broadcasting the server information to a new application(s) in the new application list. In the present embodiment, after the server information is acquired, the new application list corresponding to the original application is determined according to the package name ID of the original application carried by the server information, and the server information is delivered to the new application(s) according to the package name ID(s) of the new application(s) in the new application list.

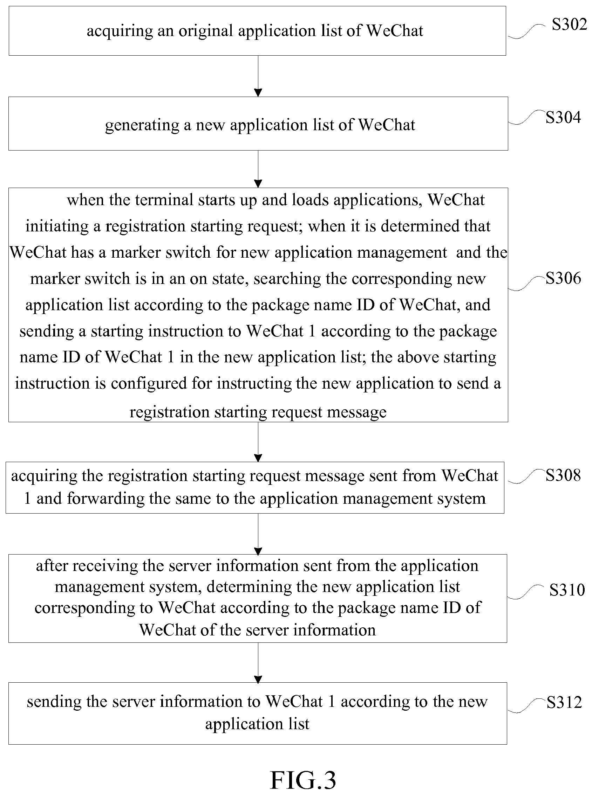

In an optional embodiment, the above steps will be described by taking WeChat as an example. FIG. 3 is a flow chart (II) of a method for an application to receive information according to an embodiment of the present disclosure. As shown in FIG. 3, the flow includes the following steps S302-S312.

Step S302, acquiring an original application list of WeChat.

In this step, the original application list includes a marker switch for new application management. If the marker switch for new application management is in the on state, a WeChat 1 process is started and run. The WeChat 1 process is invisible in the application management system, but the WeChat process is visible.

Step S304, generating a new application list of WeChat.

In this step, the new application list of the WeChat application includes data information such as a package name ID of WeChat, a package name ID of WeChat 1, WeChat 1, an icon of WeChat 1, a capability set of WeChat 1, etc.

Step S306, when the terminal starts up and loads applications, WeChat initiating a registration starting request; when it is determined that WeChat has a marker switch for new application management and the marker switch is in an on state, searches the corresponding new application list according to the package name ID of WeChat, and sending a starting instruction to WeChat 1 according to the package name ID of WeChat 1 in the new application list; the above starting instruction is configured for instruct the new application to send a registration starting request message.

In this step, after the starting instruction is received, WeChat 1 may send a registration starting request message including the package name ID of WeChat 1.

Step S308, acquiring the registration starting request message sent from WeChat 1 and forwarding the same to the application management system.

Step S310, after server information sent from the application management system is received, determining the new application list corresponding to WeChat according to the package name ID of WeChat of the server information.

Step S312, sending the server information to WeChat 1 according to the new application list.

In this step S312, after the server information is received, WeChat 1 performs corresponding process according to account information.

With the above steps, it is possible to achieve that WeChat 1 application may acquire the server information automatically, and the following problem is solved: a new application can automatically receive the server information only after the user manually starts the new application, resulting in loss or delay of the new application information, and thereby bringing great inconvenience to the user. In this way, effects are achieved that a new application can automatically acquire the server information without human intervention when the terminal starts up and loads applications, and efficiency and accuracy of the information acquisition of the new application are improved.

Through the descriptions of the above embodiments, those skilled in the art can clearly understand that the methods according to the above embodiments can be implemented by means of a combination of software and a necessary general hardware platform, and, obviously, can also be implemented by hardware; however, the former is a better implementation in many cases. Based on such understanding, the essence of the technical solution of the present disclosure (or in other words, the contribution of the present disclosure to the related art) can be embodied in the form of a software product which may be stored in a storage medium (such as a ROM/RAM, a magnetic disk, a compact disk, and the like), and include a number of instructions for a terminal device (which may be a mobile, a computer, a server, or a network device, etc.) to perform the methods described in various embodiments of the present disclosure.

### Embodiment 2

The present embodiment provides an apparatus for an application to receive information. The apparatus is provided to achieve the above embodiments and preferred implementations, and the same descriptions will not be repeated here. As used hereinafter, the term "module" may be a combination of software and/or hardware capable of achieving a preset function. Although it is preferred to implement the apparatus as described in the embodiment below by software, it is possible to conceive an implementation of hardware or a combination of software and hardware.

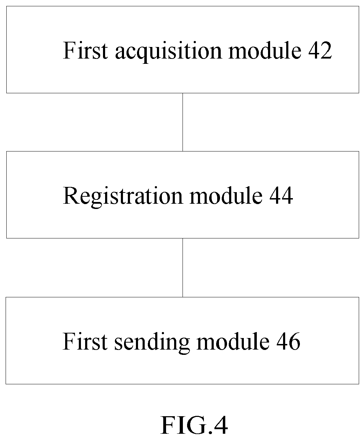

FIG. 4 is a block diagram (I) of an apparatus for an application to receive information according to an embodiment of the present disclosure. As shown in FIG. 4, the apparatus includes: a first acquisition module 42 configured to acquire, when a terminal starts up and loads applications, a registration starting request message of a new application, wherein the new application is an application process belonging to the same application as a process of an original application and running on the same terminal simultaneously with the process of the original application, and the original application is an application process installed by a system of the terminal; a registration module 44 configured to register the new application in an application management system according to the registration starting request message; and a first sending module 46 configured to send server information received from a server to the new application after the new application is registered successfully.

With the above apparatus, it is achieved that, when the terminal starts up and loads applications, it can acquire a registration starting request message of a new application automatically, and send server information received from a server to the new application according to the registration starting request message; thus it is further achieved that the new application can acquire the server information automatically, and the following problem is solved: when the terminal starts up and loads applications, the new application can automatically receive the server information only after the user manually starts the new application, resulting in loss or delay of the new application information, and thereby bringing great inconvenience to the user. In this way, effects are achieved that a new application can automatically acquire the server information without human intervention when the terminal starts up and loads applications, and efficiency and accuracy of the information acquisition of the new application are improved.

In an optional embodiment, the first sending module 46 is further configured to broadcast the server information to the new application after the server information sent by the application management system is received.

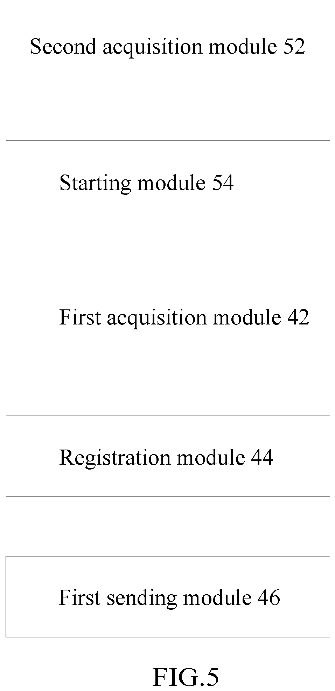

FIG. 5 is a block diagram (II) of an apparatus for an application to receive information according to an embodiment of the present disclosure. The apparatus shown in FIG. 5 further includes: a second acquisition module 52 which is coupled with a starting module 54 and is configured to acquire an original application list supporting generation of the new application, wherein the original application list includes the original application and a marker switch for new application management corresponding to the original application; and the starting module 54 which is coupled with the first acquisition module 42 and is configured to start and run the process of the new application corresponding to the original application when the marker switch for new application management is in an on state.

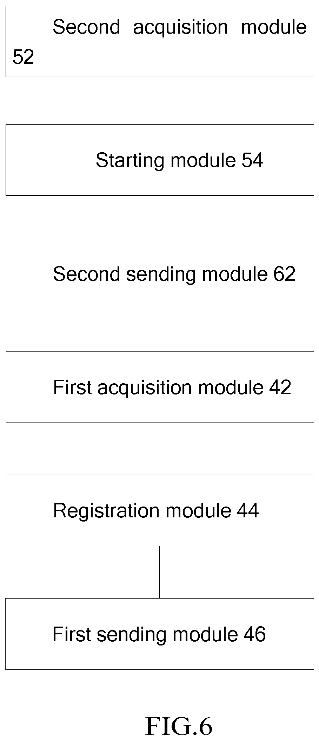

FIG. 6 is a block diagram (III) of an apparatus for an application to receive information according to an embodiment of the present disclosure. The apparatus shown in FIG. 6 further includes: a second sending module 62 which is coupled with the first acquisition module 42 and the starting module 54, and is configured to generate, if it is detected that the original application is listed in the original application list and the marker switch for new application management is in an on state after the original application initiates a registration starting request, a new application list corresponding to the original application and send a starting instruction to the new application listed in the new application list, wherein the starting instruction is configured for instructing the new application to send the registration starting request message.

In an optional embodiment, the first sending module 46 is further configured to broadcast the server information to the new application listed in the new application list.

### Embodiment 3

The present embodiment provides a storage medium. Optionally, in the present embodiment, this storage medium may be configured to store program codes for carrying out the following steps: step S1, acquiring, when a terminal starts up and loads applications, a registration starting request message of a new application, wherein the new application is an application process belonging to the same application as a process of an original application and running on the same terminal simultaneously with the process of the original application, and the original application is an application process installed by a system of the terminal; step S2, registering the new application in an application management system according to the registration starting request message; and step S3, sending server information received from a server to the new application after the new application is registered successfully.

Optionally, the storage medium is further configured to store program codes for carrying out the following step: broadcasting the server information to the new application after the server information sent from the application management system is received.

Optionally, the storage medium is further configured to store program codes for carrying out the following steps: step S1, acquiring an original application list supporting generation of the new application, wherein the original application list includes the original application and a marker switch for new application management corresponding to the original application; and step S2, starting and running the process of the new application corresponding to the original application, when the marker switch for new application management is in an on state.

Optionally, the storage medium is further configured to store program codes for carrying out the following step: after the original application initiates a registration starting request, generating if it is detected that the original application is listed in the original application list and the marker switch for new application management is in an on state, a new application list corresponding to the original application and sending a starting instruction to the new application listed in the new application list, wherein the starting instruction is configured for instructing the new application to send the registration starting request message.

Optionally, the storage medium is further configured to store program codes for carrying out the following step: broadcasting the server information to the new application listed in the new application list.

Optionally, in the present embodiment, the above storage medium may include, but not limited to, a USB flash disk, a Read-Only Memory (ROM), a Random Access Memory (RAM), a mobile hard disk, a magnetic disk, a compact disk, or various mediums capable of storing program codes.

Optionally, specific examples of the present embodiment may refer to the examples described in the above embodiments and the optional implementations, and will not be described repeatedly here.

Obviously, it should be appreciated for those skilled in the art that the above modules or steps of the present disclosure may be achieved by a general-purpose computing device, and may be aggregated to a single computing device or distributed over a network consisting of multiple computing devices. Optionally, they may be achieved by program codes executable by a computing device, and thereby they may be stored in a storage device and executed by a computing device. In some cases, the steps illustrated or described may be carried out in a sequence different from the sequence described herein, or may be made into individual integrated circuit modules, or some of the modules or steps may be achieved by a single integrated circuit module. Accordingly, the present disclosure is not limited to any specific combination of hardware and software.

The above descriptions are simply the preferred embodiments of the present disclosure, and are not intended to limit the scope of the present disclosure. A person skilled in the art can implement the disclosure in various variants. Any modifications, equivalent substitutions and improvements made within the principle of the present disclosure are intended to be covered by the scope of the present disclosure.

### Industrial Applicability

According to the embodiments of the present disclosure, when a terminal starts up and loads applications, it can acquire automatically a registration starting request message of a new application, and send server information received from a server to the new application according to the registration starting request message; thus, it is achieved that the new application acquires the server information automatically. Therefore, the following problem is solved: when the terminal starts up and loads applications, a new application can automatically receive the server information only after the user manually starts the new application, resulting in loss or delay of the new application information, and thereby bringing great inconvenience to the user. In this way, effects are achieved that a new application can automatically acquire the server information without human intervention when the terminal starts up and loads applications, and efficiency and accuracy of the information acquisition of the new application are improved.

## Claims

1. A method for an application to receive information, comprising:
acquiring, when a terminal starts up and loads applications, a registration starting request message of a new application, wherein the new application is an application process belonging to a same application as a process of an original application and running on a same terminal simultaneously with the process of the original application, and the original application is an application process installed by a system of the terminal;
registering the new application in an application management system according to the registration starting request message; and
sending server information received from a server to the new application after the new application is registered successfully.

2. The method of claim 1, wherein the sending the server information received from the server to the new application comprises: broadcasting the server information to the new application after the server information sent from the application management system is received.

3. The method of claim 2, wherein prior to the acquiring the registration starting request message of the new application, the method further comprises:
acquiring an original application list for generating the new application, wherein the original application list comprises the original application and a marker switch for new application management corresponding to the original application; and
starting and running the process of the new application corresponding to the original application, when the marker switch for new application management is in an on state.

4. The method of claim 3, wherein, after the original application initiates a registration starting request, the method further comprises:
generating, if it is detected that the original application is listed in the original application list and the marker switch for new application management is in an on state, a new application list corresponding to the original application and sending a starting instruction to the new application listed in the new application list, wherein the starting instruction is configured for instructing the new application to send the registration starting request message.

5. The method of claim 4, wherein the broadcasting the server information to the new application comprises: broadcasting the server information to the new application listed in the new application list.

6. An apparatus for an application to receive information, comprising:
a first acquisition module configured to acquire, when a terminal starts up and loads applications, a registration starting request message of a new application, wherein the new application is an application process belonging to a same application as a process of an original application and running on a same terminal simultaneously with the process of the original application, and the original application is an application process installed by a system of the terminal;
a registration module configured to register the new application in an application management system according to the registration starting request message; and
a first sending module configured to send server information received from a server to the new application after the new application is registered successfully.

7. The apparatus of claim 6, wherein the first sending module is further configured to broadcast the server information to the new application after the server information sent from the application management system is received.

8. The apparatus of claim 7, wherein the apparatus further comprises:
a second acquisition module configured to acquire an original application list for generating the new application, wherein the original application list comprises the original application and a marker switch for new application management corresponding to the original application; and
a starting module configured to start and run the process of the new application corresponding to the original application when the marker switch for new application management is in an on state.

9. The apparatus of claim 8, wherein the apparatus further comprises: a second sending module configured to generate, if it is detected that the original application is listed in the original application list and the marker switch for new application management is in an on state after the original application initiates a registration starting request, a new application list corresponding to the original application and send a starting instruction to the new application listed in the new application list, wherein the starting instruction is configured for instructing the new application to send the registration starting request message.

10. The apparatus of claim 9, wherein the first sending module is further configured to broadcast the server information to the new application listed in the new application list.
